# EUROPÄISCHE PATENTSCHRIFT

(11) **EP 2 468 976 B1**
(45) Veröffentlichungstag und Bekanntmachung des Hinweises auf die Patenterteilung: **25.11.2015**
(21) Anmeldenummer: 11010013.8
(22) Anmeldetag: 20.12.2011
(51) Int. Cl.: E04B 9/30, B64C 1/06

(54) **Verkleidung**
Liner
Revêtement

(30) Priorität: 21.12.2010 DE 102010055461
(43) Veröffentlichungstag der Anmeldung: 27.06.2012
(73) Patentinhaber: Airbus Operations GmbH, 21129 Hamburg (DE); Lantal Textiles AG, 4901 Langenthal (CH); Sefar AG, 9410 Heiden (CH)
(72) Erfinder: Greiner, Switbert, Dr., 70771 Oberaichen (DE)
(74) Vertreter: Schiffer, Axel Martin

(56) Entgegenhaltungen:
- DE-A1-102005 040 571
- DE-A1-102007 001 376
- DE-A1-102009 010 861
- FR-A- 1 518 396

## Beschreibung

Die Erfindung betrifft eine Verkleidung für Flächen, insbesondere Decken oder Wände, nach dem Oberbegriff des Anspruchs 1. Weiter betrifft die Erfindung ein Befestigungs- und Spannmittel gemäß Anspruch 12.

Eine bekannte Verkleidung umfasst mindestens zwei Rahmenprofile, welche einander gegenüberliegend und beabstandet zueinander angeordnet sind, mindestens ein Membranelement, das zwischen den Rahmenprofilen angeordnet und mit den Rahmenprofilen mindestens teilweise mit Hilfe von hintergreifenden Verbindungsmitteln verbunden ist, und mindestens ein Spannmittel zum Spannen des Membranelements zwischen den Rahmenprofilen.

Eine Verkleidung der genannten Art ist beispielsweise aus DE 10 2007 001 376 A1 und DE 10 2005 035 174 A1 bekannt.

DE 10 2007 001 376 A1 beschreibt ein Membranelement und ein Verfahren zum Verkleiden von Flächen, insbesondere von Decken oder Wänden, mit einem Rahmen und einem darauf gespannten Membranmaterial. An dem Rahmen sind Spanneinheiten vorgesehen, um das Membranmaterial zu spannen.

FR 1 518 396 beschreibt eine aus einem elastischen Material gebildete Zwischendecke, bei welcher ein elastisches Abdeckelement mittels eines Reißverschlusses an einer an der Decke angebrachten Holzlatte befestigt wird.

Als eine **Aufgabe** der Erfindung kann angesehen werden, eine Verkleidung sowie ein Befestigungs- und Spannmittel anzugeben, welche ein einfaches Montieren und Spannen eines Membranelements ermöglichen.

Die Aufgabe wird durch eine Verkleidung mit den Merkmalen des Anspruchs 1 und ein Befestigungs- und Spannmittel mit den Merkmalen des Anspruchs 12 gelöst. Vorteilhafte Ausführungsformen und Varianten der erfindungsgemäßen Verkleidung und des erfindungsgemäßen Befestigungs- und Spannmittels sind in den abhängigen Ansprüchen angegeben und werden außerdem in der folgenden Beschreibung, insbesondere im Zusammenhang mit den Figuren, erläutert.

Bei einer Verkleidung der oben genannten Art ist erfindungsgemäß vorgesehen, dass das Membranelement als Spannmittel mindestens einen Spann-Reißverschluss aufweist, wobei das Membranelement durch Schließen des Spann-Reißverschlusses in einen zwischen den Rahmenprofilen gespannten Zustand überführbar ist.

Ein erster Grundgedanke der Erfindung kann darin gesehen werden, das Membranelement mit einem Spannmittel zu versehen, so dass das Spannen des Membranelements durch dieses selbst bewirkt werden kann. Zum Spannen des Membranelements ist es somit grundsätzlich nicht erforderlich, die Rahmenprofile, an denen das Membranelement befestigt ist, zu bewegen.

Das Spannen des Membranelements kann auf einfache Weise dadurch bewerkstelligt werden, dass der Spann-Reißverschluss geschlossen wird. Umgekehrt lässt sich das Membranelement entspannen, indem der Spann-Reißverschluss geöffnet wird.

Ein wesentlicher Vorteil der erfindungsgemäßen Verkleidung besteht darin, dass die Rahmenprofile, welche je nach Spannung und Größe des Membranelements erhebliche Kräfte aufnehmen müssen, grundsätzlich als starre und unbewegliche Teile ausgeführt sein können. Es erfolgt also eine strukturelle Trennung zwischen dem Tragen und Spannen des Membranelements. Die Tragfunktion wird durch die Rahmenprofile bereitgestellt, während das Spannen durch den mindestens einen Spann-Reißverschluss erfolgt, der Bestandteil des Membranelements ist.

Bei dem Spann-Reißverschluss kann es sich um einen üblichen Reißverschluss mit Zähnen, beispielsweise aus Metall oder Kunststoff, handeln. Es ist jedoch auch möglich, dass der Spann-Reißverschluss als zahnloser Reißverschluss ausgebildet ist.

In einer bevorzugten Ausführungsform der Erfindung sind mindestens ein erstes Paar von Rahmenprofilen und ein zweites Paar von Rahmenprofilen vorgesehen, wobei sich das zweite Paar von Rahmenprofilen quer zu dem ersten Paar von Rahmenprofilen erstreckt, und wobei das Membranelement zweiachsig zwischen den Rahmenprofilen spannbar ist. Unter einem zweiachsigen Spannen des Membranelements ist insbesondere zu verstehen, dass das Membranelement in zwei Raumrichtungen spannbar ist. Durch das zweiachsige Spannen kann ein faltenfreies und glattes Membranelement bereitgestellt werden. Das gespannte Membranelement kann auftretenden Lasten federnd widerstehen und nach Entfernen einer Last wieder in die ursprüngliche Form zurückgehen.

Zum Befestigen des Membranelements an den Rahmenprofilen ist das Membranelement in einer bevorzugten Ausführungsform sowohl mit dem ersten Paar von Rahmenprofilen als auch mit dem zweiten Paar von Rahmenprofilen mindestens teilweise mit Hilfe von hintergreifenden Verbindungsmitteln verbunden.

Vorzugsweise sind zum zweiachsigen Spannen des Membranelements mindestens zwei Spann-Reißverschlüsse vorgesehen, wobei sich ein erster Spann-Reißverschluss in Richtung des ersten Paares von Rahmenprofilen und ein zweiter Spann-Reißverschluss in Richtung des zweiten Paares von Rahmenprofilen erstreckt. Besonders bevorzugt ist es dabei, dass sich die Spann-Reißverschlüsse jeweils parallel zu den Rahmenprofilen erstrecken.

In einer bevorzugten Ausführungsform weist das Membranelement eine rechteckige oder quadratische Membranfläche auf. Zum Spannen des Membranelements in zwei Raumrichtungen erstrecken sich die Spann-Reißverschlüsse vorzugsweise senkrecht zueinander und jeweils parallel zu den Randseiten des Membranelements.

Das Spannen des Membranelements kann dadurch vereinfacht werden, dass mindestens zwei Spann-Reißverschlüsse vorhanden sind, welche im Wesentlichen parallel zueinander angeordnet sind. Durch die mindestens zwei Spann-Reißverschlüsse kann das Membranelement zweistufig gespannt werden, wobei zunächst ein erster Spann-Reißverschluss und anschließend ein zweiter Spann-Reißverschluss geschlossen wird. Die gesamte Spannung des Membranelements kann somit auf mehrere Reißverschlüsse aufgeteilt werden. Für ein vereinfachtes zweiachsiges Spannen sind mindestens vier Spann-Reißverschlüsse vorgesehen, wobei jeweils zwei Spann-Reißverschlüsse parallel zueinander angeordnet sind.

In einer bevorzugten Ausgestaltung ist jedem Rahmenprofil mindestens ein eigener Spann-Reißverschluss zugeordnet. Bei vier Rahmenprofilen, welche sich entlang der Randseiten eines rechteckigen oder quadratischen Membranelements erstrecken, umfasst das Membranelement also mindestens vier Spann-Reißverschlüsse, wobei jeweils zwei Spann-Reißverschlüsse vorzugsweise parallel zueinander angeordnet sind. Das Spannen des Membranelements kann somit in beide Ebenen in zwei Schritten mit zwei separaten Spann-Reißverschlüssen erfolgen. Vorzugsweise sind die Spann-Reißverschlüsse jeweils an den Randseiten des Membranelements angeordnet.

Erfindungsgemäß ist es bevorzugt, dass als hintergreifendes Verbindungsmittel mindestens eine Kederverbindung vorhanden ist. Eine Kederverbindung zeichnet sich durch einen Keder und eine Kedernut aus, in welcher der Keder verschiebbar entlang einer Längsachse der Kedernut geführt ist. Vorzugsweise ist sowohl in eine Längsrichtung des Membranelements als auch in eine Querrichtung eine Kederverbindung vorgesehen.

Durch die Längsverschiebbarkeit des Keders in der Kedernut können Dehnungen des Membranelements während des Spannens aufgenommen oder ausgeglichen werden. Dies ist insbesondere beim zweiachsigen Spannen des Membranelements vorteilhaft, bei welchem regelmäßig Dehnungen in zwei Raumrichtungen auftreten, die sich an den Randbereichen des Membranelements ausbilden. Durch die Kederverbindung kann das Membranelement während des Spannens entlang der Rahmenprofile gleiten.

Durch die Kederverbindung kann das Membranelement also in eine Querrichtung zum Keder beziehungsweise zur Kedernut gespannt werden, wobei das Membranelement entlang einer Längsrichtung des Keders oder der Kedernut bewegbar ist.

Bei einer bevorzugten Ausgestaltung der Kederverbindung umfasst das Membranelement einen Keder und das Rahmenprofil eine Kedernut. Der Keder kann sowohl im ungespannten als auch im gespannten Zustand entlang der Kedernut gleiten, so dass eine Längsverschieblichkeit des Membranelements entlang einer Längsrichtung der Kedernut gegeben ist.

Eine besonders einfache Montierbarkeit des Membranelements zusammen mit einem unkomplizierten Spannen kann dadurch erreicht werden, dass das Membranelement mindestens einen Spann-Reißverschluss mit zwei Verschlussbändern und eine Membran aufweist, dass ein erstes Verschlussband an einem Randbereich der Membran gebildet ist und dass ein zweites Verschlussband zum Befestigen des Membranelements an einem Rahmenprofil als Teil eines hintergreifenden Verbindungsmittels eine Randverstärkung, insbesondere einen Keder, aufweist.

Durch die Kombination eines Spann-Reißverschlusses mit einer integrierten Randverstärkung beziehungsweise einem integrierten Keder wird ein Befestigungs- und Spannmittel bereitgestellt, das einerseits ein Befestigen des Membranelements an einem Rahmenprofil unter Bereitstellung einer Längsverschieblichkeit zur Kompensation von Dehnungen und andererseits ein Spannen des Membranelements ermöglicht.

Der Spann-Reißverschluss kann in grundsätzlich bekannter Weise eines Reißverschlusses zwei Gewebestreifen als Verschlussbänder aufweisen, an denen jeweils Zähne, die miteinander in Eingriff gebracht werden können, vorgesehen sind.

Das erste Verschlussband kann als Teil der Membran einstückig mit dieser ausgebildet oder als separates Element an der Membran befestigt sein. Der Spann-Reißverschluss, insbesondere das erste Verschlussband, kann hierbei zum Beispiel durch Aufnähen, Ankleben oder Anschweißen an der Membran befestigt sein. Die Membran kann beispielsweise ein Gewebe oder eine Kunststofffolie aufweisen oder hieraus bestehen.

Die Randverstärkung oder der Keder befindet sich vorzugsweise an einem der Membran abgewandten Seite des Spann-Reißverschlusses, insbesondere an einem den Zähnen des zweiten Verschlussbandes gegenüberliegenden Ende des zweiten Verschlussbandes. Die Randverstärkung oder der Keder erstreckt sich vorzugsweise entlang einer Längsrichtung des Spann-Reißverschlusses, insbesondere parallel zu den Zähnen des Reißverschlusses. Vorzugsweise enthält die Randverstärkung oder der Keder einen Kunststoff oder besteht aus Kunststoff.

Für eine Vereinfachung des Spannvorgangs ist vorgesehen, dass der Spann-Reißverschluss zwei Verschlussbänder aufweist und dass mindestens ein Verbindungsteil zwischen den beiden Verschlussbändern vorgesehen ist, durch welches bei geöffnetem Spann-Reißverschluss eine Klaffung zwischen den Verschlussbändem begrenzt wird. Das Verbindungsteil verbindet also die beiden Verschlussbänder derart miteinander, dass die Verschlussbänder bei geöffnetem Spann-Reißverschluss nicht beliebig weit voneinander entfernt werden können. Trotz geöffnetem Spann-Reißverschluss wird also durch das Verbindungsteil ein vollständiges Trennen der Verschlussbänder voneinander verhindert. Durch die Begrenzung des maximalen Abstands der beiden Verschlussbänder zueinander kann der Reißverschluss einfacher geschlossen werden. Das Verbindungsteil ist vorzugsweise an beiden Verschlussbändern befestigt, beispielsweise auf diese aufgeschweißt, aufgeklebt oder mit diesen vernäht.

Eine vorteilhafte Wirkung des Verbindungsteils besteht zudem darin, dass das Membranelement bei geöffnetem Spann-Reißverschluss oder geöffneten Spann-Reißverschlüssen als Einheit in einem ungespannten Zustand mit den Rahmenprofilen verbunden werden kann. Insbesondere können die an dem Membranelement vorgesehenen Keder weitgehend kräftefrei, also ohne Überwindung von Spannkräften, in die an den Rahmenprofilen vorgesehene Kedernuten eingeführt werden. Nachdem das Membranelement hintergreifend mit den Rahmenprofilen verbunden ist, kann das Membranelement durch Schließen des oder der Spann-Reißverschlüsse gespannt werden.

In einer bevorzugten Ausführungsform umfasst das Verbindungsteil einen textilen Verbindungsstreifen, welcher entlang dem Spann-Reißverschluss angeordnet ist. Der Verbindungsstreifen kann beispielsweise ein Stoffstreifen sein. Vorzugsweise ist der Verbindungsstreifen mit dem ersten und dem zweiten Verschlussband des Spann-Reißschlusses verbunden. Der Verbindungsstreifen ist dabei so angeordnet, dass dieser bei geschlossenem Spann-Reißverschluss etwa parallel neben dem Spann-Reißverschluss verläuft.

Der gewünschte Effekt des Verbindungsstreifens, die Begrenzung des Abstandes der beiden Verschlussbänder, kann auch erzielt werden, indem der geschlossene Reißverschluss derart angenäht wird, dass die Membran eine Aufwölbung entlang des Reißverschlusses erfährt, die derjenigen des Verbindungsstreifens entspricht.

Statt eines separaten Verbindungsstreifens kann der gewünschte Effekt also durch eine spezielle Befestigung des Spann-Reißverschlusses auf der Membran erzielt werden. Hierbei weist die Membran im befestigten Zustand eine Aufwölbung auf, die parallel zum Spann-Reißverschluss verläuft. Der Verbindungsstreifen und die Membran können also ein und dasselbe Materialstück sein. Verbindungsstreifen und Membran können demnach einstückig oder integral ausgebildet sein. Der Verbindungsstreifen kann ein integraler Bestandteil der Membran sein.

Ein einfaches Spannen des Membranelements bei gleichzeitig verbesserter Zugangsmöglichkeit zu einem Rückbereich des Membranelements wird erzielt, wenn das Verbindungsteil einen Zugangs-Reißverschluss umfasst, welcher entlang dem Spann-Reißverschluss angeordnet ist. Das Verbindungsteil umfasst also einen weiteren Reißverschluss, der neben dem Spann-Reißverschluss, vorzugsweise parallel zu diesem, verläuft. Der Spann-Reißverschluss und der Zugangs-Reißverschluss befinden sich vorzugsweise jeweils an ein und demselben Rand- oder Mittenbereich des Membranelements. Zugangs-Reißverschluss und Spann-Reißverschluss können insgesamt auch als Doppelreißverschluss bezeichnet werden. Die beiden Reißverschlüsse sind zueinander quer zur Fläche der Membran angeordnet. Es liegt also maximal einer der Reißverschlüsse in der Ebene der Membran, während sich der zweite Reißverschluss außerhalb der Membranebene befindet.

Der Spann-Reißverschluss und der Zugangs-Reißverschluss sind vorzugsweise so zueinander angeordnet, dass durch Schließen des Zugangs-Reißverschlusses ein schlaffer, geschlossener oder ein vorgespannter Zustand und durch anschließendes Schließen des Spann-Reißverschlusses ein gespannter Zustand des Membranelements einstellbar ist. Bei geschlossenem Zugangs-Reißverschluss und geöffnetem Spann-Reißverschluss wird durch das Verbindungsteil ein Abstand der Verschlussbänder des Spann-Reißverschlusses zueinander begrenzt.

Durch den anstelle des Verbindungsstreifens vorgesehenen Zugangs-Reißverschluss werden die Vorteile eines einfachen Spannens und eines einfachen Zugangs zu einem Rückbereich des Membranelements kombiniert. Bei geschlossenem Zugangs-Reißverschluss kann das Membranelement als Einheit an den Rahmenprofilen befestigt werden. Außerdem wird ausgehend von einem geschlossenen Zugangs-Reißverschluss ein einfaches Spannen des Membranelements ermöglicht. Durch Öffnen beider Reißverschlüsse kann auf einfache Weise ohne vollständiges Entfernen des Membranelements ein Zugang zu einem Rückbereich des Membranelements bereitgestellt werden.

Für ein einfaches Anbringen des Membranelements an den Rahmenprofilen ist es zweckmäßig, dass das Membranelement in einem ungespannten und/oder vorgespannten Zustand, insbesondere bei geöffnetem Spann-Reißverschluss, frei zwischen den Rahmenprofilen bewegbar ist. Das Membranelement lässt sich vorzugsweise weitgehend kräftefrei oder lose in die Kedernuten der Rahmenprofile einführen. Dabei klafft zwischen den Verschlussbändern des Spann-Reißverschlusses eine Lücke mit einer durch das Verbindungsteil begrenzten Breite. Nach Einführen der Keder des Membranelements in die Kedernuten der Rahmenprofile kann das Membranelement durch Schließen des oder der Spann-Reißverschlüsse einfach gespannt werden.

Durch den Spann-Reißverschluss oder die Spann-Reißverschlüsse ist es grundsätzlich möglich, das Membranelement ohne Bewegung der Rahmenprofile zu spannen. Die Rahmenprofile können somit als fixierte, also im Wesentlichen unbewegliche Randelemente ausgeführt sein. Zum zusätzlichen Spannen und/oder zum Justieren des Membranelements ist es jedoch bevorzugt, dass mindestens eines der Rahmenprofile bewegbar ist. Dabei ist es bevorzugt, dass das Rahmenprofil in eine Richtung, welche sich quer zu einer Längsachse der Kederverbindung erstreckt, verschoben werden kann. Das Membranelement kann demnach zusätzlich dadurch gespannt werden, dass der Abstand zwischen zwei gegenüber liegenden Rahmenprofilen vergrößert wird.

Eine Verschieblichkeit der Rahmenprofile kann durch eine geeignete Lagerung und Befestigung der Rahmenprofile bereitgestellt werden. Zum Bewegen der Rahmenprofile sind vorzugsweise Justiermittel, beispielsweise in Form von Justierschrauben, vorgesehen.

Die Erfindung bezieht sich weiterhin auf ein Befestigungs- und Spannmittel für Membranelemente mit einem ersten Verschlussband und einem zweiten Verschlussband, durch welche ein Spann-Reißverschluss gebildet wird, wobei an einem der beiden Verschlussbänder entlang einer Längsrichtung des Verschlussbandes eine Randverstärkung gebildet ist, die zum Bilden einer hintergreifenden Verbindung mit einer Kedernut verbindbar ist. Das Befestigungs- und Spannmittel umfasst also einen Spann-Reißverschluss mit einer integrierten Randverstärkung. Durch das Befestigungs- und Spannmittel wird ein Montageelement bereitgestellt, das einerseits die Befestigung eines Membranelements an einer Kedernut und andererseits ein Spannen des Membranelements ermöglicht.

In einer bevorzugten Ausführungsform ist die Randverstärkung ein Keder. Eine besonders feste und dauerhafte Verbindung zwischen Verschlussband und Keder kann erzielt werden, wenn der Keder mit dem Verschlussband fest, insbesondere durch Aufspritzen, verbunden ist. Bei dem Verschlussband kann es sich insbesondere durch ein textiles Band, insbesondere ein Gewebeband handeln. Durch das Aufspritzen des Keders, welcher insbesondere einen Kunststoff enthalten kann oder aus Kunststoff bestehen kann, ist das Verschlussband besonders sicher an dem Keder befestigt, so dass Spannkräfte übertragen werden können. Besonders bevorzugt ist es, wenn das Verschlussband in den Keder eingebettet ist.

In einer bevorzugten Ausführungsform umfasst das Befestigungs- und Spannmittel ein Verbindungsteil, wie im Zusammenhang mit der Verkleidung und den nachfolgenden Figuren beschrieben. Auch die weiteren im Zusammenhang mit der Verkleidung beschriebenen Merkmale betreffen in entsprechender Weise das erfindungsgemäße Befestigungs- und Spannmittel. Dabei werden die jeweils beschriebenen Vorteile erzielt.

Die Erfindung wird nachfolgend anhand von bevorzugten Ausführungsbeispielen, welche in den beigefügten schematischen Zeichnungen dargestellt sind, weiter beschrieben. In den Zeichnungen zeigt:
- Fig. 1: eine erste Ausführungsform einer erfindungsgemäßen Verkleidung;
- Fig. 2: eine Querschnittsansicht eines geöffneten Spann-Reißverschlusses;
- Fig. 3: die Verkleidung gemäß Fig. 1 mit geschlossenen Spann-Reißverschlüssen;
- Fig. 4: eine Querschnittsansicht eines geschlossenen Spann-Reißverschlusses;
- Fig. 5: eine Querschnittsansicht eines Membranelements mit einem Doppelreißverschluss;
- Fig. 6: eine Querschnittsansicht eines Membranelements mit einem Spann-Reißverschluss und einem Verbindungsstreifen;
- Fig. 7: eine zweite Ausführungsform einer erfindungsgemäßen Verkleidung;
- Fig. 8: ein Eckdetail aus Fig. 7;
- Fig. 9: eine perspektivische Ansicht einer dritten Ausführungsform einer erfindungsgemäßen Verkleidung;
- Fig. 10: eine Vorderansicht der dritten Ausführungsform;
- Fig. 11: eine perspektivische Detailansicht von außen der dritten Ausführungsform;
- Fig. 12: eine perspektivische Detailansicht von innen der dritten Ausführungsform;
- Fig. 13: eine perspektivische Ansicht einer vierten Ausführungsform einer erfindungsgemäßen Verkleidung;
- Fig. 14: eine Vorderansicht der vierten Ausführungsform;
- Fig. 15: eine perspektivische Detailansicht von außen der vierten Ausführungsform;
- Fig. 16: eine perspektivische Detailansicht von innen der vierten Ausführungsform;
- Fig. 17: eine perspektivische Ansicht einer fünften Ausführungsform einer erfindungsgemäßen Verkleidung;
- Fig. 18: eine Vorderansicht einer sechsten Ausführungsform einer erfindungsgemäßen Verkleidung und
- Fig. 19: einen Detailausschnitt der sechsten Ausführungsform;

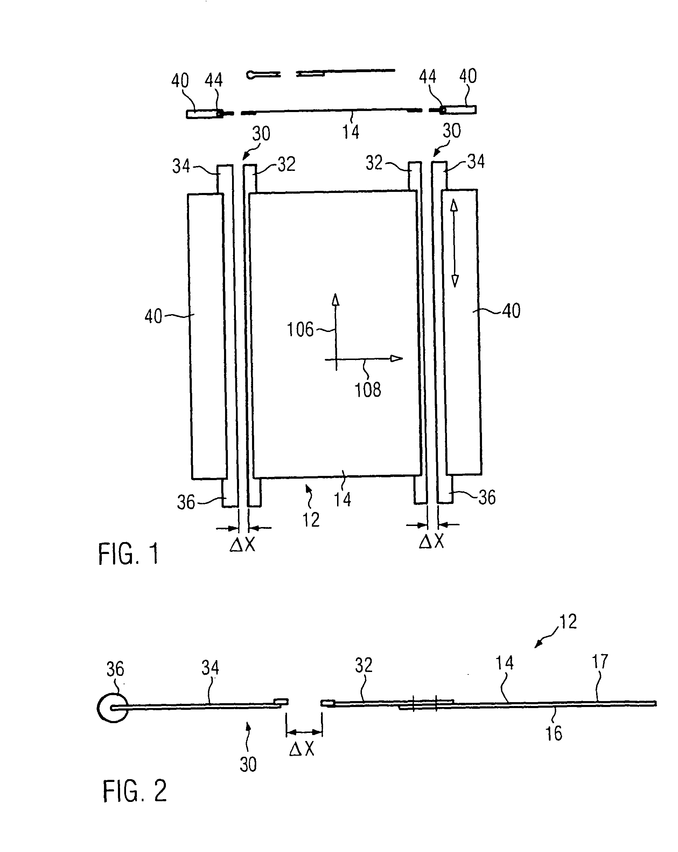

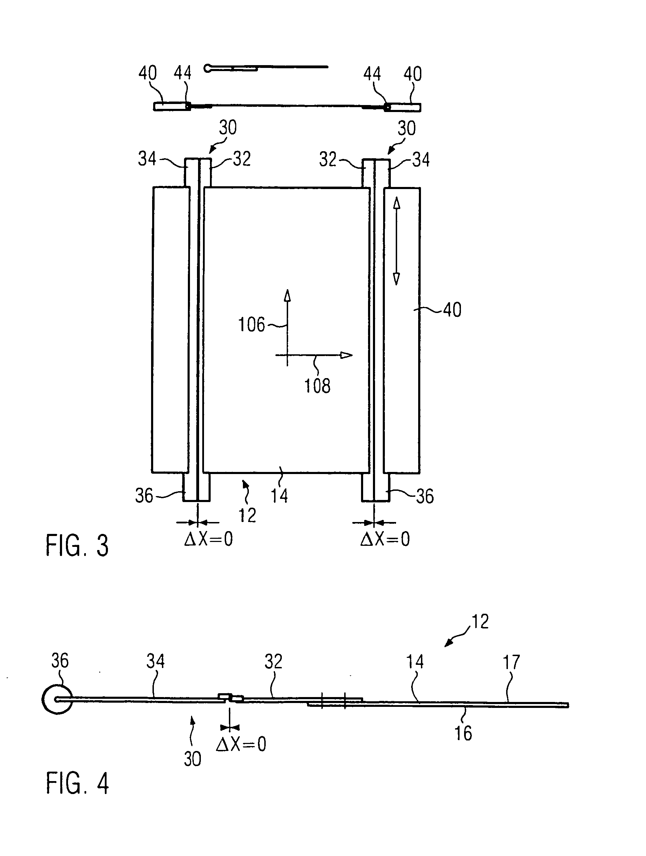

Eine erste Ausführungsform einer erfindungsgemäßen Verkleidung 10 ist in den Figuren 1 und 3 dargestellt. Äquivalente Komponenten sind in allen Figuren mit denselben Bezugszeichen versehen.

Die Verkleidung 10 umfasst ein Membransystem mit zwei gegenüberliegend und parallel zueinander angeordneten Rahmenprofilen 40, zwischen denen ein Membranelement 12 gespannt werden kann.

Die Rahmenprofile 40 weisen jeweils eine Kedernut 44 auf, welche sich entlang einer Längsrichtung 106 erstreckt. Zur Befestigung des Membranelements 12 an den Rahmenprofilen 40 ist an den seitlichen Randbereichen des Membranelements 12 jeweils ein Keder 36 vorgesehen, welcher entlang der Längsrichtung 106 in die Kedernuten 44 der Rahmenprofile 40 eingeführt werden kann. Das Membranelement 12 ist so an den Rahmenprofilen 40 entlang der Längsrichtung 106 gleitend gelagert. Die Elemente in Querrichtung können analog ausgeführt werden.

Das Membranelement 12 umfasst eine textile Membran 14 und zwei an den Längsrändern der Membran 14 angeordnete einfache oder doppelte Spann-Reißverschlüsse 30 zum Spannen des Membranelements 12 in einer zur Längsrichtung 106 quer verlaufenden Querrichtung 108.

Die Spann-Reißverschlüsse 30 erstrecken sich entlang der Längsrichtung 106 der Verkleidung 10 und des Membranelements 12 und parallel zu dem Keder 36. Durch Schließen der Spann-Reißverschlüsse 30 kann das Membranelement 12 beziehungsweise die Membran 14 in Querrichtung 108 gespannt werden. Entsprechend kann das Membranelement 12 durch Öffnen der Spann-Reißverschlüsse 30 in Querrichtung 108 entspannt werden. In dem entspannten Zustand des Membranelements 12 ist dieses weitgehend frei gleitend in den Kedernuten 44 der Rahmenprofile 40 gelagert.

Die Spann-Reißverschlüsse 30 weisen jeweils ein erstes Verschlussband 32 und ein zweites Verschlussband 34 auf. Das erste Verschlussband 32 ist mit der Membran 14 fest verbunden, so dass Zugkräfte übertragen werden können. Beispielsweise ist das erste Verschlussband 32 an die Membran 14 angeschweißt oder angenäht. An dem zweiten Verschlussband 34 ist ein Keder 36 befestigt, welcher in die Kedernut 44 eingeführt ist. Durch den Spann-Reißverschluss 30 und den Keder 36 wird ein Befestigungs- und Spannmittel gebildet.

Fig. 1 zeigt die Verkleidung 10 in einem geöffneten Zustand. Dabei sind die Spann-Reißverschlüsse 30 zumindest teilweise offen und die Membran 14 befindet sich in einem ungespannten Zustand. Zwischen den ersten Verschlussbändern 32 und den zweiten Verschlussbändern 34 besteht jeweils eine Klaffung oder ein Abstand Δx.

Eine Querschnittsansicht des geöffneten Spann-Reißverschlusses 30 mit Membran 14 ist in Fig. 2 dargestellt. Das Membranelement 12 umfasst eine Sichtseite 16 und eine Rückseite 17. Der Spann-Reißverschluss 30 ist an der Rückseite 17 der Membran 14 angebracht. Das zweite Verschlussband 34 des Spann-Reißverschlusses 30 ist in den Keder 36 eingebettet und mit diesem fest und formschlüssig verbunden. Der Keder 36 kann hierzu auf das zweite Verschlussband 34 aufextrudiert sein.

In Fig. 3 ist die Membran 14 in einem gespannten Zustand dargestellt. Die Spann-Reißverschlüsse 30 sind hierzu geschlossen und es besteht keine Klaffung mehr. Die Membran 14 ist in Querrichtung 108 gespannt. In Längsrichtung 106 ist die Membran 14 trotz des gespannten Zustands weiterhin entlang der Rahmenprofile 40 verschiebbar. Die Keder 36 sind also in den Kedernuten 44 axial verschiebbar.

Eine Querschnittsansicht des Spann-Reißverschlusses 30 im geschlossenen Zustand ist in Fig. 4 dargestellt.

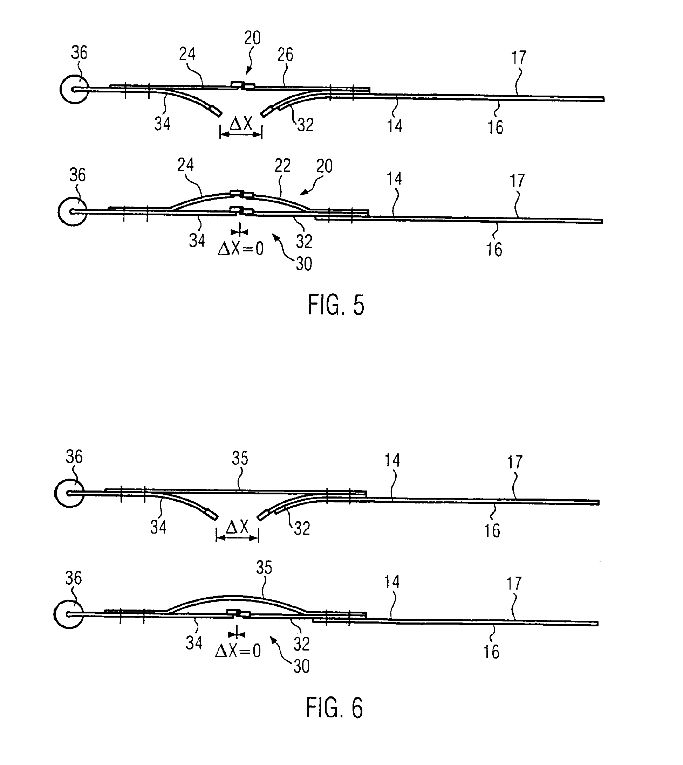

Eine zweite Ausführungsform einer erfindungsgemäßen Verkleidung beziehungsweise eines erfindungsgemäßen Befestigungs- und Spannmittels ist in Fig. 5 dargestellt. Bei dieser Ausführungsform sind an jeder der Längsseiten der Membran 14 jeweils zwei Reißverschlüsse 20, 30 angeordnet. Die Reißverschlüsse 20, 30 können insgesamt auch als Doppelreißverschluss bezeichnet werden und umfassen einen Zugangs-Reißverschluss 20 und einen Spann-Reißverschluss 30.

Die zweite Ausführungsform ist somit dadurch gekennzeichnet, dass zumindest einem der Spann-Reißverschlüsse 30 der Verkleidung 10 ein Zugangs-Reißverschluss 20 zugeordnet ist.

Wie in Fig. 5 dargestellt, ist der Spann-Reißverschluss 30 an der Sichtseite 16 des Membranelements 12 angeordnet. Der Zugangs-Reißverschluss 20 stellt ein Verbindungsteil dar und befindet sich an der Rückseite 17 des Membranelements 12, damit er bei geschlossenem Spann-Reißverschluss 30 möglichst nicht sichtbar ist. Die Reißverschlüsse 20, 30 sind in Richtung der Membranfläche nicht hintereinander, sondern neben- beziehungsweise übereinander angeordnet.

Der Spann-Reißverschluss 30 umfasst ein erstes Verschlussband 32 und ein zweites Verschlussband 34, welches in einen Keder 36 eingebettet und mit diesem zur Übertragung der Spannkräfte fest verbunden ist. Der Aufbau des Spann-Reißverschlusses 30 entspricht dem der ersten Ausführungsform, so dass auf eine weitergehende Beschreibung an dieser Stelle verzichtet wird.

Der Zugangs-Reißverschluss 20 weist ein erstes Verschlussband 22 und ein zweites Verschlussband 24 auf und ist auf den Spann-Reißverschluss 30 aufgebracht oder an diesem befestigt. Der Zugangs-Reißverschluss 20 definiert eine maximale Breite des Membranelements 12, die ein einfaches Einfädeln oder Einziehen in die Kedernuten 44 ohne Querspannungen erlaubt. Bei geschlossenem Zugangs-Reißverschluss 20 und geöffnetem Spann-Reißverschluss 30 ist das Membranelement 12 weitgehend schlaff, befindet sich also in einem ungespannten oder nur leicht gespannten Zustand. Dabei besteht eine Klaffung Δx zwischen den Verschlussbändern 32, 34 des Spann-Reißverschlusses 30. Das Membranelement 12 kann in diesem Zustand somit besonders einfach durch Einführen der Keder 36 in die Kedernuten 44 an den Rahmenprofilen 40 befestigt werden. Die Klaffung Δx liegt vor dem Spannen typischerweise im Bereich von ca. 0,5 bis 1,0 % der Breite des Membranelements 12.

Nach dem Einziehen und gegebenenfalls nach dem Aufbringen einer Längsvorspannung wird die Klaffung durch Schließen des Spann-Reißverschlusses 30 entfernt und hierdurch wird das Membranelement 12 beziehungsweise die Membran 14 gespannt. Der Spann-Reißverschluss 30 ist im Vergleich zu dem Zugangs-Reißverschluss 20 so angeordnet, dass der Zugangs-Reißverschluss 20 bei Schließen des Spann-Reißverschlusses 30 entlastet wird. Dabei kann sich der Zugangs-Reißverschluss 20 aufwölben, wie den Figuren, insbesondere Fig. 5, zu entnehmen ist. Zu Revisionszwecken können beide Reißverschlüsse 20, 30 geöffnet und wieder geschlossen werden.

Eine weitere Ausführungsform eines Reißverschlusses beziehungsweise Befestigungs- und Spannmittels ist in Fig. 6 dargestellt. Anstelle des Doppelreißverschlusses gemäß Fig. 5 ist ein Spann-Reißverschluss 30 vorgesehen, um den herum als Verbindungsteil ein Verbindungsstreifen 35 angeordnet ist. Der Verbindungsstreifen 35 verbindet die beiden Verschlussbänder 32, 34 des Spann-Reißverschlusses 30. Durch den Verbindungsstreifen 35 wird die Klaffung Δx des geöffneten Spann-Reißverschlusses 30 begrenzt. Der Verbindungsstreifen 35 kann beispielsweise aus einem Textilstreifen bestehen, der mit den beiden Verschlussbändern 32, 34 fest verbunden ist. Der Verbindungsstreifen 35 kann hierzu beispielsweise aufgenäht oder angeschweißt sein. Wie in Fig. 6 dargestellt, ist der Verbindungsstreifen 35 vorzugsweise an einer Rückseite 17 des Membranelements 12 vorgesehen, damit er bei geschlossenem Spann-Reißverschluss 30 möglichst nicht sichtbar ist. Bei geschlossenem Spann-Reißverschluss 30 ist der Verbindungsstreifen 35 schlaff beziehungsweise entspannt und kann sich gegenüber der Membranfläche aufwölben.

Derselbe Effekt kann auch durch ein entsprechendes Aufnähen der Membran 14 mit einer Wölbung über dem Spann-Reißverschluss 30 erfolgen. Statt des Verbindungsstreifens 35 kann also der Reißverschluss 30 direkt auf die oberhalb des Reißverschlusses 30 vorgewölbte Membran 14 aufgenäht werden.

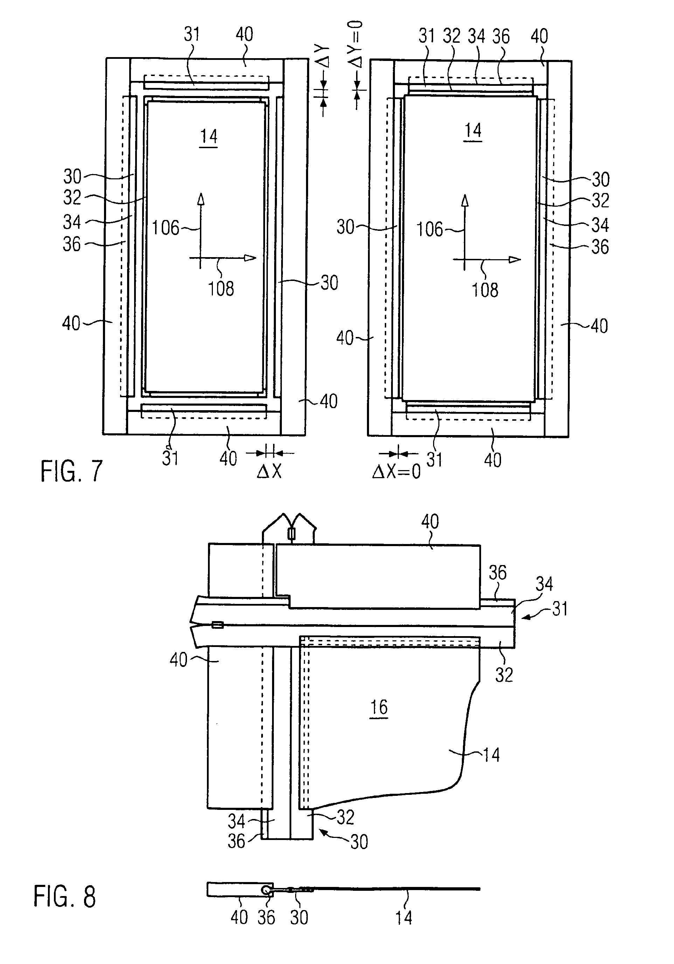

Fig. 7 zeigt eine Verkleidung mit einem zweiachsig spannbaren Membranelement 12. In der linken Darstellung der Fig. 7 ist das Membranelement 12 in einem ungespannten Zustand dargestellt. Das Membranelement 12 umfasst an beiden Längsseiten jeweils einen Spann-Reißverschluss 30 und an beiden Querseiten jeweils einen weiteren Spann-Reißverschluss 31. Wie auch die Spann-Reißverschlüsse 30 weisen die Spann-Reißverschlüsse 31 jeweils ein erstes und ein zweites Verschlussband 32, 34 auf. Die Spann-Reißverschlüsse 30 in Längsrichtung und die Spann-Reißverschlüsse 31 in Querrichtung sind vorzugsweise gleich aufgebaut. Zusätzlich können weitere Merkmale, wie im Zusammenhang mit den Figuren 1 bis 4 beschrieben, vorhanden sein.

Die Spann-Reißverschlüsse 30, 31 sind in der linken Darstellung der Fig. 7 geöffnet. Zum Spannen des Membranelements 12 werden die Spann-Reißverschlüsse 30, 31 geschlossen, wie in der rechten Darstellung der Fig. 7 gezeigt. Ein besonders einfachen Spannen lässt sich erreichen, wenn zusätzlich zu den Spann-Reißverschlüsse 30, 31 Verbindungsteile vorgesehen sind, beispielsweise in Form von Verbindungsstreifen 35 oder Zugangsreißverschlüssen 20.

Die Spann-Reißverschlüsse 30 ermöglichen einen einfachen Einbau, ein Schließen und Öffnen des Membranelements 12 und zudem das Spannen des Membranelements 12, welches simultan mit dem Schließen erfolgen kann. Mit dem Spannen in zwei Richtungen sind unvermeidlich auch Dehnungsbewegungen des Membranelements 12 in zwei Richtungen verbunden, die sich auch an den Rändern ausbilden müssen, um den gewünschten zweiachsigen Spannungszustand zu erzielen. Der Keder 36 sorgt mit den Gleitbewegungen in der Kedernut 44 dafür, dass ein gleichmäßiges zweiachsiges Spannen erfolgen kann.

Fig. 8 zeigt ein Eckdetail aus Fig. 7. Beide Spann-Reißverschlüsse 30, 31 sind jeweils an der Rückseite 17 an der Membran 14 angebracht. Im Eckbereich zwischen Längs- und Querseite des Membranelements 12 überschneiden sich die beiden Spann-Reißverschlüsse 30, 31, wobei der Spann-Reißverschluss 31 auf der Sichtseite 16 des Spann-Reißverschlusses 30 verläuft. Zum Spannen des Membranelements 12 wird zunächst der Spann-Reißverschluss 30 geschlossen, welcher entlang der Längsrichtung 106 des Membranelements 12 verläuft. Anschließend wird der entlang der Querrichtung 108 verlaufende Spann-Reißverschluss 31 geschlossen.

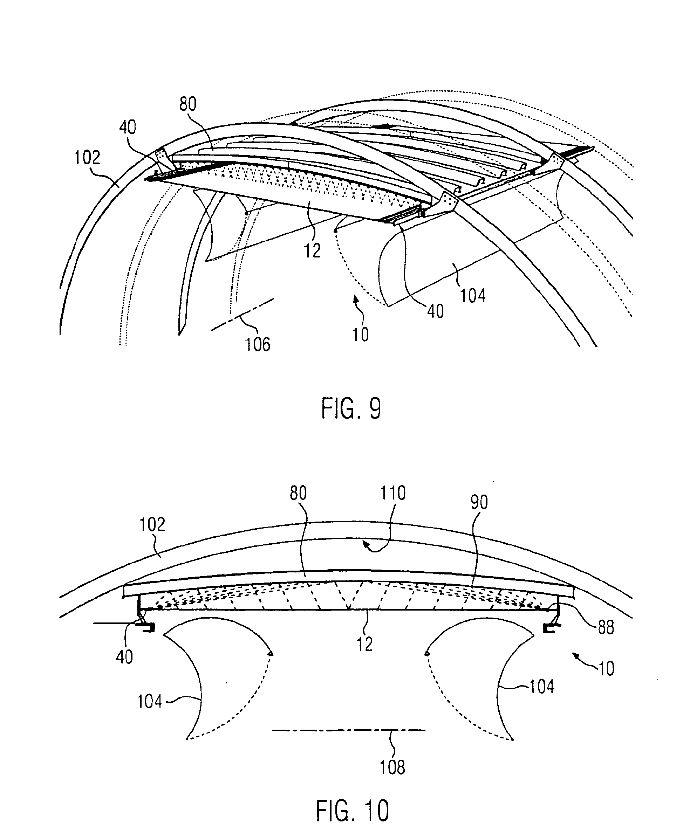

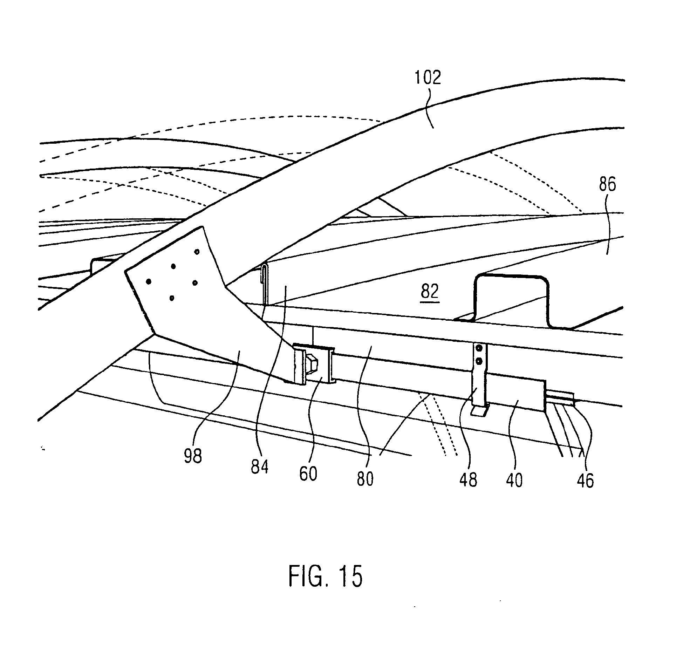

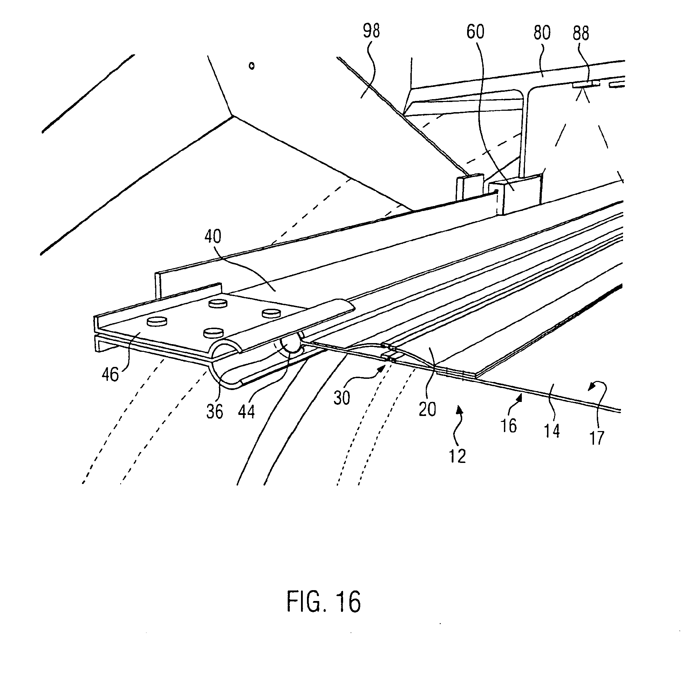

Weitere Details der Erfindung werden nachfolgend mit Bezug auf die Figuren 9 bis 19 beschrieben. Bei diesen Ausführungsformen ist neben den bereits beschriebenen Elementen eine Abdeckhaube 80 vorhanden. Die Verkleidung 10 umfasst einen oder mehrere Spann-Reißverschlüsse 30, 31, wie im Zusammenhang mit den Figuren 1 bis 8 beschrieben. Die Spann-Reißverschlüsse 30, 31 sind zum zweiachsigen Spannen des Membranelements 12 entlang der Längsrichtung 106 und entlang der Querrichtung 108 angeordnet. Zusätzlich sind Verbindungsteile in Form von ZugangsReißverschlüssen 20 und/oder Verbindungsstreifen 35 vorgesehen.

Die Figuren 9 bis 17 zeigen die Verkleidung 10 im Innenraum eines Flugzeugs an der Decke eines Passagierraumes. Die Decke stellt dabei eine zu verkleidende Fläche 110 dar.

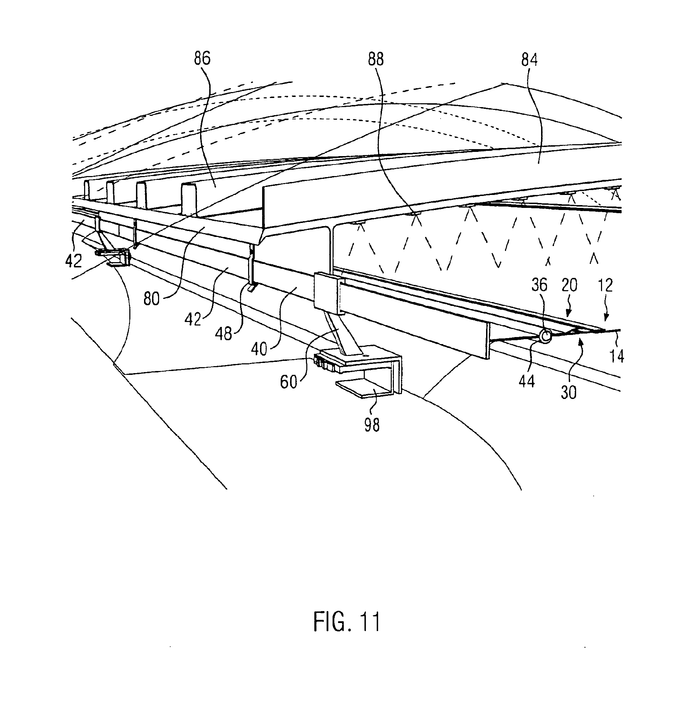

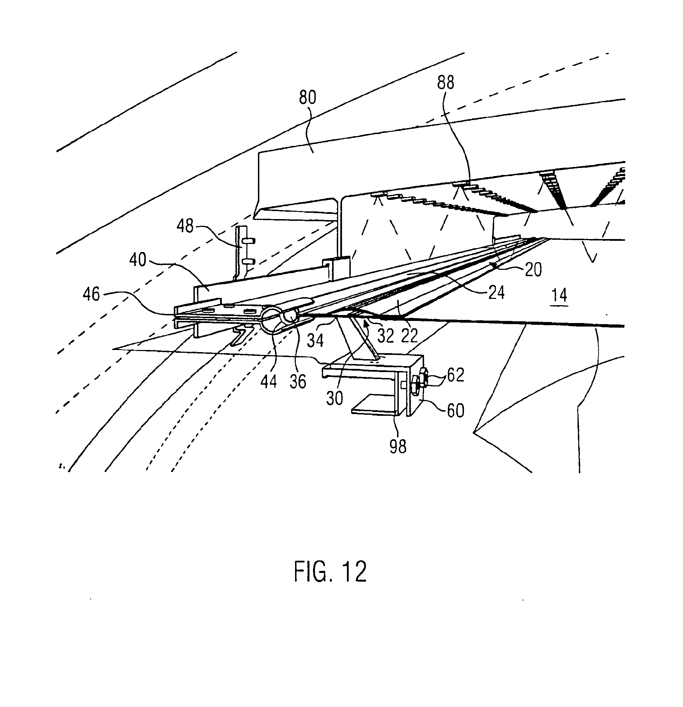

Bei der in den Figuren 11 und 12 dargestellten dritten Ausführungsform ist die Verkleidung 10 an einem gegebenenfalls bereits vorhandenen Auflager einer auszutauschenden Flugzeugdecke an Gepäckfächern 104 des Flugzeugs befestigt.

Die Verkleidung 10 umfasst ein Membransystem mit zwei gegenüberliegend und parallel zueinander angeordneten Rahmenprofilen 40, zwischen denen ein Membranelement 12 gespannt ist. Des Weiteren umfasst die Verkleidung 10 eine neben und im Wesentlichen parallel zu dem Membranelement 12 angeordnete flache Abdeckhaube 80.

Die Rahmenprofile 40 weisen jeweils einen T-förmigen Querschnitt mit einem Quersteg und einem zentralen Längssteg auf, wie insbesondere in den Figuren 11 und 12 erkennbar. Am Ende des zentralen Längsstegs des T-förmigen Rahmenprofils 40 ist als hintergreifende Profilierung eine Kedernut 44 vorgesehen. Die Rahmenprofile 40 und die Kedernuten 44 erstrecken sich entlang einer Längsrichtung 106 der Verkleidung 10 und des Flugszeugs können auch als Profilschienen oder Kederschienen bezeichnet werden.

Die Rahmenprofile 40 sind in regelmäßigen Abständen mittels Befestigungselementen 60 an der zu verkleidenden Fläche, insbesondere an einer Montagebasis 98, befestigt. Die Montagebasis 98 ist durch mehrere Lagerelemente gebildet, die unterhalb der Verkleidung 10 angeordnet sind und das Auflager für die Verkleidung 10 bilden.

Die Rahmenprofile 40 sind nur in einem Punkt in Längsrichtung 106 fixiert an der Montagebasis 98 und/oder den Befestigungselementen 60 aufgelagert und im Übrigen entlang in Längsrichtung 106 gleitend gelagert. Hierdurch wirken sich Längenänderungen des Flugzeugrumpfes, die bei verschiedenen Flugbedingungen auftreten können, nicht belastend auf die Rahmenprofile 40 aus.

In Bezug auf gegebenenfalls bestehende beengte Verhältnisse bei der Montage kann es sinnvoll sein, die Länge der Rahmenprofile 40 zu begrenzen. Die Rahmenprofile 40 sind daher in eine Mehrzahl von Profilsegmenten 42 unterteilt, die zum Bilden des gesamten Rahmenprofils 40 miteinander fluchtend verbunden sind. Entstehende Montagestöße sind vorzugsweise in den Momenten-Nullpunkten der als Durchlaufträger wirkenden Rahmenprofile 40 angeordnet. Zum Verbinden der einzelnen Profilsegmente 42 sind Verbindungselemente 46 vorgesehen. Die Verbindungselemente 46 sind so gestaltet, dass eine formschlüssige Verbindung der Profilsegmente 42 erzwungen wird. Hierdurch wird ein Versatz der Profilsegmente 42 verhindert.

Die Verbindungselemente 46 umfassen jeweils zwei Verbindungsplatten, die parallel zueinander angeordnet sind und zwischen denen die Profilsegmente 42 eingeklemmt werden können. Die Verbindungselemente 46 weisen ebenfalls eine nutartige Vertiefung auf, die sich um die Kedernut 44 des Rahmenprofils 40 erstreckt.

In dem dargestellten Ausführungsbeispiel sind zum weiteren Spannen und/oder zum Justieren der Spannung des Membranelements 12 Justiermittel 62 vorgesehen, mit welchen zumindest eines der Rahmenprofile 40 in einer Querrichtung 108 bewegt werden kann. Durch Betätigen der Justiermittel 62 kann somit der Abstand der beiden Rahmenprofile 40 verändert werden. Die Justiermittel 62 sind in der dargestellten Ausführungsform als Justierschrauben ausgeführt. Durch die Justiermittel 62 können die Rahmenprofile 40 insbesondere gegenüber der Montagebasis 98 in der Querrichtung 108 bewegt werden.

Oberhalb des Membranelements 12 und beabstandet zu diesem ist eine Abdeckhaube 80, insbesondere aus Leichtmetall, vorgesehen. Die Abdeckhaube 80 erstreckt sich zwischen dem Membranelement 12 und der zu verkleidenden Fläche 110, also einem oberen Bereich des Flugzeugrumpfes. Die Abdeckhaube 80 überdeckt eine Fläche, die größer ist als eine Fläche des Membranelements 12. Insbesondere ragt die Abdeckhaube 80 seitlich über das Membranelement 12 und die entlang der seitlichen Ränder des Membranelements 12 angeordneten Rahmenprofile 40 hinaus.

Insbesondere zum Ableiten von gegebenenfalls auftretendem Kondenswasser an einer Oberseite der Verkleidung 10 weist die Abdeckhaube 80 einen gewölbten oder gebogenen Querschnitt auf. Gegebenenfalls an einer Oberseite der Abdeckhaube 80 auftretendes Kondenswasser kann somit aufgrund der Wölbung der Abdeckhaube 80 seitlich abfließen, ohne mit dem Membranelement 12 in Kontakt zu kommen.

Weiterhin kann auch die Abdeckhaube 80 mehrere Haubensegmente 82 aufweisen, die zum Bilden der gesamten Haube 80 miteinander verbunden sind. Eine Möglichkeit der Verbindung der einzelnen Haubensegmente 82 miteinander besteht darin, dass an den entsprechenden stirnseitigen Randbereichen der einzelnen Haubensegmente 82 Aufkantungen 84 vorgesehen sind, wobei jeweils eine Aufkantung eines Haubensegments 82 eine Aufkantung eines benachbarten Haubensegments 82 hinter- oder umgreift. Hierzu kann beispielsweise jeweils eine der Aufkantungen 84 U-förmig gestaltet sein.

Zur Versteifung der Abdeckhaube 80 können Versteifungselemente 86 vorgesehen sein, die sich insbesondere in Querrichtung 108 der Abdeckhaube 80 erstrecken können.

Die Abdeckhaube 80 kann an einer dem Membranelement 12 zugewandten Unter- oder Innenseite eine Mehrzahl von Leuchtmitteln 88, beispielsweise Leuchtdioden, aufweisen, wie beispielsweise in den Figuren 9, 11 und 12 gezeigt. Die Leuchtmittel 88 strahlen Licht in Richtung des Membranelements 12 beziehungsweise der Membran 14, an welcher das Licht gestreut wird. Die Membran 14 kann hierzu ein lichttechnisches Gewebe aufweisen. Alternativ können auch an den Randbereichen der Verkleidung, insbesondere an den Rahmenprofilen 40, Leuchtmittel 88 vorgesehen sein, wie in Fig. 10 dargestellt. Zum Reflektieren des auf diese Weise seitlich eingestrahlten Lichts weist die Abdeckhaube an ihrer Unter- oder Innenseite einen Reflektor 90 auf.

Die Abdeckhaube 80 ist über Befestigungselemente, welche in der dargestellten Ausführungsform durch Verbindungsklammern 48 gebildet sind, an den Rahmenprofilen 40 befestigt. Die Verbindungsklammern 48 können an die Abdeckhaube 80 angeschraubt, angenietet oder angeklebt sein. Die Rahmenprofile 40 können für eine einfache Montierbarkeit mittels einer lösbaren Rastverbindung mit den Verbindungsklammern 48 verbunden sein.

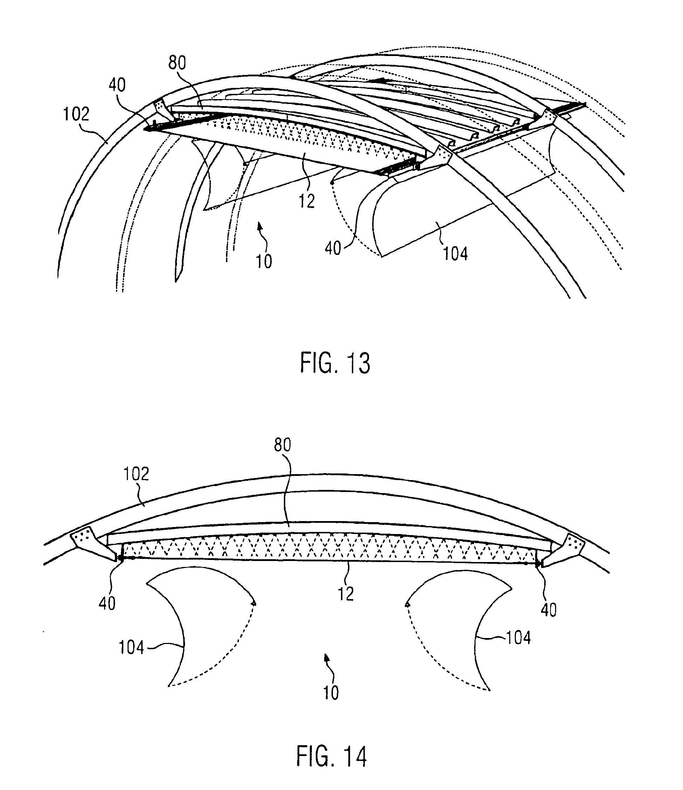

Eine vierte Ausführungsform einer erfindungsgemäßen Verkleidung 10 ist in den Figuren 13 bis 16 dargestellt. Die vierte Ausführungsform unterscheidet sich von der dritten Ausführungsform dadurch, dass die Verkleidung 10 nicht an Auflagerpunkten im Innenraum des Flugzeugs oberhalb der Gepäckfächer 104, sondern an dem Flugzeugrumpf selbst befestigt ist. Die Verkleidung 10 kann insbesondere an den Spanten 102 eines Flugzeugs befestigt werden. Hierzu sind C-förmige Halteelemente vorgesehen, die eine Montagebasis 98 für die Verkleidung 10 bilden. Die Rahmenprofile 40 sind, wie im Zusammenhang mit den Figuren 9 bis 12 beschrieben, gegenüber der Montagebasis 98 beweglich.

Das Membranelement 12 ist vorzugsweise einstückig ausgeführt und wird als Einheit mit seinen Kedern in die Kedernuten der Rahmenprofile 40 eingefädelt. Im Gegensatz zu den Rahmenprofilen 40 und der Abdeckhaube 80 ist das Membranelement 12 somit vorzugsweise nicht segmentiert.

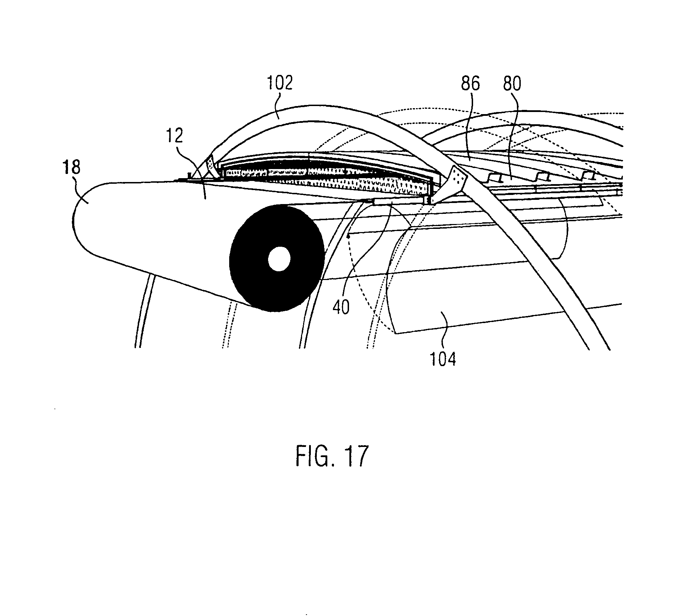

Insbesondere, wenn die Membran 14 durch die vorgesehenen Spann-Reißverschlüsse 30 nicht vollständig von den Kedern 36 entfernt werden kann, ist es von Vorteil, das Membranelement 12, wie in der fünften Ausführungsform gemäß Fig. 17 gezeigt, auf eine Rolle 18 aufzurollen, um ein einfaches Entfernen und Einfädeln des Membranelements 12 zu ermöglichen.

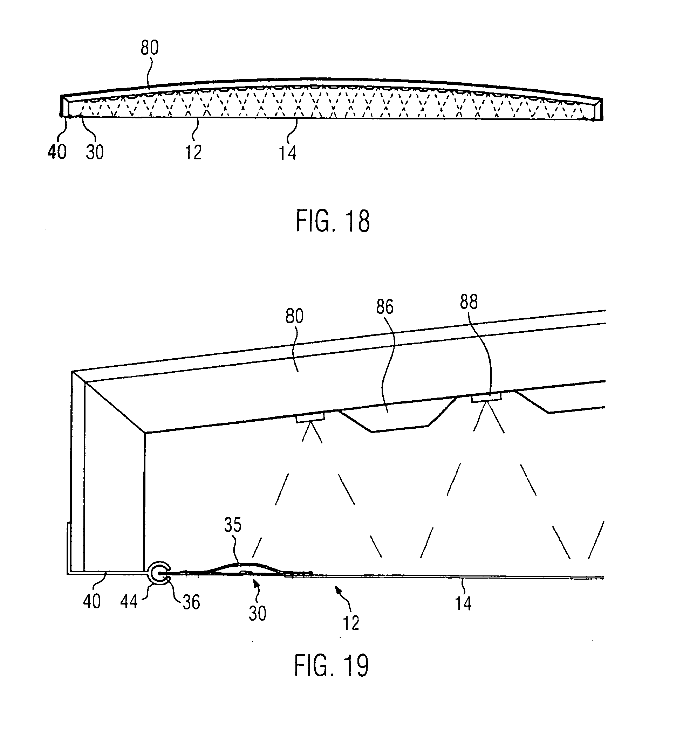

Ein sechstes Beispiel einer erfindungsgemäßen Verkleidung 10 ist in den Figuren 18 und 19 dargestellt. Im Unterschied zu der dritten bis fünften Ausführungsform werden bei dieser Variante Spannkräfte, welche von dem Membranelement 12 auf die seitlichen Rahmenprofile 40 übertragen werden, unmittelbar in die Abdeckhaube 80 eingeleitet. Die Rahmenprofile 40 sind hierzu fest mit der Abdeckhaube 80 verbunden. Die Abdeckhaube 80 ist zur Aufnahme der Spannkräfte besonders steif ausgeführt.

Bei dieser Ausgestaltung kann die Abdeckhaube 80 als ganzes Element ein- und ausgebaut werden. Um die erforderliche Steifigkeit zu erzielen, können an der Abdeckhaube 80 Versteifungselemente 86 oder Rippen vorgesehen sein, welche die Spannkräfte aus dem Membranelement 12 zumindest teilweise, vorzugsweise vollständig, aufnehmen können. Der Raumabschluss der Abdeckhaube 80 und der Zusammenhalt der Rippen können durch eine dünne, zylindrische Schale gewährleistet werden. Die Schale kann beispielsweise aus Blech mit Versteifungsrippen ausgeführt sein.

Fig. 19 zeigt zudem eine Ausgestaltung des Spann-Reißverschlusses 30 mit einem Verbindungsstreifen 35, wie vorstehend im Zusammenhang mit Fig. 6 ausführlich erläutert.

Die erfindungsgemäße Verkleidung lässt sich einfach montieren und zweiachsig spannen. Zudem wird die Möglichkeit eines Öffnens und Schließens und eines einfachen Austausches ganzer Membranfelder bereitgestellt. Durch den Spann-Reißverschluss mit integriertem Keder kann der Spannvorgang erleichtert und gleichzeitig ein einfacher Zugang, beispielsweise zu Revisionszwecken, zu einem Rückbereich des Membranelements bereitgestellt werden.

## Patentansprüche

1. Verkleidung für Flächen, insbesondere Decken oder Wände, insbesondere in Passagierflugzeugen,
- mit mindestens zwei Rahmenprofilen (40), welche einander gegenüberliegend und beabstandet zueinander angeordnet sind,
- mit mindestens einem Membranelement (12), das zwischen den Rahmenprofilen (40) angeordnet und mit den Rahmenprofilen (40) mindestens teilweise mit Hilfe von hintergreifenden Verbindungsmitteln verbunden ist, und
- mit mindestens einem Spannmittel zum Spannen des Membranelements (12) zwischen den Rahmenprofilen (40),
**dadurch gekennzeichnet,**
- **dass** das Membranelement (12) als Spannmittel mindestens einen Spann-Reißverschluss (30) aufweist, wobei das Membranelement (12) durch Schließen des Spann-Reißverschlusses (30) in einen zwischen den Rahmenprofilen (40) gespannten Zustand überführbar ist,
- **dass** der Spann-Reißverschluss (30, 31) zwei Verschlussbänder (32, 34) aufweist und
- **dass** mindestens ein Verbindungsteil zwischen den beiden Verschlussbändern (32, 34) vorgesehen ist, durch welches bei geöffnetem Spann-Reißverschluss (30, 31) eine Klaffung zwischen den Verschlussbändern (32, 34) begrenzt wird.

2. Verkleidung nach Anspruch 1,
**dadurch gekennzeichnet,**
**dass** mindestens ein erstes Paar von Rahmenprofilen (40) und ein zweites Paar von Rahmenprofilen (41) vorgesehen ist, wobei sich das zweite Paar von Rahmenprofilen (41) quer zu dem ersten Paar von Rahmenprofilen (40) erstreckt, und
**dass** das Membranelement (12) zweiachsig zwischen den Rahmenprofilen (40, 41) spannbar ist.

3. Verkleidung nach Anspruch 2,
**dadurch gekennzeichnet,**
**dass** zum zweiachsigen Spannen des Membranelements (12) mindestens zwei Spann-Reißverschlüsse (30, 31) vorgesehen sind, wobei sich ein erster Spann-Reißverschluss (30) in Richtung des ersten Paars von Rahmenprofilen (40) und ein zweiter Spann-Reißverschluss (31) in Richtung des zweiten Paars von Rahmenprofilen (41) erstreckt.

4. Verkleidungsvorrichtung nach einem der Ansprüche 1 bis 3,
**dadurch gekennzeichnet,**
**dass** mindestens zwei Spann-Reißverschlüsse (30, 31) vorhanden sind, welche im Wesentlichen parallel zueinander angeordnet sind.

5. Verkleidung nach einem der Ansprüche 1 bis 4,
**dadurch gekennzeichnet,**
**dass** als hintergreifendes Verbindungsmittel mindestens eine Kederverbindung vorhanden ist.

6. Verkleidung nach einem der Ansprüche 1 bis 5,
**dadurch gekennzeichnet,**
**dass** das Membranelement (12) mindestens einen Spann-Reißverschluss (30, 31) mit zwei Verschlussbändern (32, 34) und eine Membran (14) aufweist, dass ein erstes Verschlussband (32) an einem Randbereich der Membran (14) gebildet ist und
**dass** ein zweites Verschlussband (34) zum Befestigen des Membranelements (12) an einem Rahmenprofil (40, 41) als Teil eines hintergreifenden Verbindungsmittels eine Randverstärkung, insbesondere einen Keder, aufweist.

7. Verkleidung nach einem der Ansprüche 1 bis 6,
**dadurch gekennzeichnet,**
**dass** das Verbindungsteil einen textilen Verbindungsstreifen (35) umfasst, welcher entlang dem Spann-Reißverschluss (30, 31) angeordnet ist.

8. Verkleidung nach einem der Ansprüche 1 bis 7,
**dadurch gekennzeichnet,**
**dass** das Verbindungsteil einen Zugangs-Reißverschluss (20) umfasst, welcher entlang dem Spann-Reißverschluss (30, 31) angeordnet ist.

9. Verkleidung nach Anspruch 8,
**dadurch gekennzeichnet,**
**dass** der Spann-Reißverschluss (30, 31) und der Zugangs-Reißverschluss (20) so zueinander angeordnet sind, dass durch Schließen des Zugangs-Reißverschlusses (20) ein vorgespannter Zustand und durch anschließendes Schließen des Spann-Reißverschlusses (30, 31) ein gespannter Zustand des Membranelements (12) einstellbar ist.

10. Verkleidung nach einem der Ansprüche 5 bis 9,
**dadurch gekennzeichnet,**
**dass** das Membranelement (12) in einem ungespannten und/oder vorgespannten Zustand, insbesondere bei geöffnetem Spann-Reißverschluss (30, 31), frei zwischen den Rahmenprofilen (40, 41) bewegbar ist.

11. Verkleidung nach einem der Ansprüche 1 bis 10,
**dadurch gekennzeichnet,**
**dass** mindestens eines der Rahmenprofile (40, 41) zum zusätzlichen Spannen und/oder zum Justieren des Membranelements (12) bewegbar ist.

12. Befestigungs- und Spannmittel für Membranelemente (12) mit einem ersten Verschlussband (32) und einem zweiten Verschlussband (34), durch welche ein Spann-Reißverschluss (30, 31) gebildet wird, wobei an einem der beiden Verschlussbänder (32, 34) entlang einer Längsrichtung des Verschlussbandes (32, 34) eine Randverstärkung gebildet ist, die zum Bilden einer hintergreifenden Verbindung mit einer Kedernut verbindbar ist,
**dadurch gekennzeichnet,**
**dass** mindestens ein Verbindungsteil zwischen den beiden Verschlussbändern (32, 34) vorgesehen ist, durch welches bei geöffnetem Spann-Reißverschluss (30, 31) eine Klaffung zwischen den Verschlussbändern (32, 34) begrenzt wird.

13. Befestigungs- und Spannmittel nach Anspruch 12,
**dadurch gekennzeichnet,**
**dass** die Randverstärkung ein Keder (36) ist, der mit dem Verschlussband (32, 34) fest, insbesondere durch Aufspritzen, verbunden ist.

## Claims

1. Liner for surfaces, in particular ceilings or walls, in particular in passenger aircraft,
- with at least two profiled frame elements (40) which are arranged opposite each other and spaced apart from each other,
- with at least one membrane element (12) which is arranged between the profiled frame elements (40) and is connected to the profiled frame elements (40) at least in part using rearwardly engaging connection means, and
- with at least one tautening means to tauten the membrane element (12) between the profiled frame elements (40),
**characterised in that**
- the membrane element (12) has, as a tautening means, at least one tautening zip fastener (30), wherein the membrane element (12) can be conveyed, by closing the tautening zip fastener (30), into a tautened state between the profiled frame elements (40),
- the tautening zip fastener (30, 31) has two fastening straps (32, 34) and
- at least one connecting part is provided between the two fastening straps (32; 34), through which, when the tautening zip fastener (30, 31) is open, a gaping divergence between the fastening straps (32, 34) is limited.

2. Liner according to claim 1,
**characterised in that**
at least one first pair of profiled frame elements (40) and one second pair of profiled frame elements (41) are provided, wherein the second pair of profiled frame elements (41) extends transversely to the first pair of profiled frame elements (40); and
the membrane element (12) can be biaxially tautened between the profiled frame elements (40, 41).

3. Liner according to claim 2,
**characterised in that**
for biaxial tautening of the membrane element (12) at least two tautening zip fasteners (30, 31) are provided, wherein a first tautening zip fastener (30) extends in the direction of the first pair of profiled frame elements (40) and a second tautening zip fastener (31) extends in the direction of the second pair of profiled frame elements (41).

4. Liner device according to one of claims 1 to 3,
**characterised in that**
at least two tautening zip fasteners (30, 31) are provided which are arranged substantially parallel to each other.

5. Liner according to one of claims 1 to 4,
**characterised in that**
at least one piping connection is provided as a rearwardly engaging connection means.

6. Liner according to one of claims 1 to 5,
**characterised in that**
the membrane element (12) has at least one tautening zip fastener (30, 31) with two fastening straps (32, 34) and a membrane (14),
a first fastening strap (32) is formed at an edge region of the membrane (14) and a second fastening strap (34) for fixing the membrane element (12) to a profiled frame element (40, 41) has an edge reinforcement, in particular a piping, as part of a rearwardly engaging connection means.

7. Liner according to one of claims 1 to 6,
**characterised in that**
the connecting part comprises a textile connecting strip (35) which is arranged along the tautening zip fastener (30, 31).

8. Liner according to one of claims 1 to 7,
**characterised in that**
the connecting part comprises an access zip fastener (20) which is arranged along the tautening zip fastener (30, 31).

9. Liner according to claim 8,
**characterised in that**
the tautening zip fastener (30, 31) and the access zip fastener (20) are arranged relative to each other so that, by closing the access zip fastener (20), a pretautened state can be set, and, by subsequent closing of the tautening zip fastener (30, 31), a tautened state of the membrane element (12) can be set.

10. Liner according to one of claims 5 to 9,
**characterised in that**
the membrane element (12) can be freely moved in a non-tautened and / or pretautened state, in particular when the tautening zip fastener (30, 31) is open, between the profiled frame elements (40, 41).

11. Liner according to one of claims 1 to 10,
**characterised in that**
at least one of the profiled frame elements (40, 41) can be moved for additional tautening and / or adjustment of the membrane element (12).

12. Fixing and tautening means for membrane elements (12) with a first fastening strap (32) and a second fastening strap (34), through which a tautening zip fastener (30, 31) is formed, wherein an edge reinforcement is formed on one of the two fastening straps (32, 34) along a longitudinal direction of the fastening strap (32, 34), this edge reinforcement being connectable to a piping groove to form a rearwardly engaging connection,
**characterised in that**
at least one connecting part is provided between the two fastening straps (32, 34), through which, when the tautening zip fastener (30, 31) is open, a gaping divergence between the fastening straps (32, 34) is limited.

13. Fixing and tautening means according to claim 12,
**characterised in that**
the edge reinforcement is a piping (36) which is fixed to the fastening strap (32, 34), in particular by spraying-on.

## Revendications

1. Revêtement pour surfaces, en particulier pour des plafonds ou des murs, en particuliers dans des avions de transport de passagers, comprenant
- au moins deux profilés de châssis (40), qui sont disposés de manière à se faire face les uns les autres et de manière espacée les uns des autres,
- au moins un élément à membrane (12), qui est disposé entre les profilés de châssis (40) et relié aux profilés de châssis (40) au moins en partie à l'aide de moyens d'assemblage venant en prise par l'arrière, et
- au moins un moyen de serrage servant à serrer l'élément à membrane (12) entre les profilés de châssis (40),
**caractérisé en ce**
- **que** l'élément à membrane (12) présente en tant que moyen de serrage au moins un système de fermeture éclair de serrage (30), l'élément à membrane (12) pouvant être transféré par la fermeture du système de fermeture éclair de serrage (30) dans un état serré entre les profilés de châssis (40),
- **que** le système de fermeture éclair de serrage (30, 31) présente deux bandes de fermeture (32, 34), et
- **qu'**au moins une partie d'assemblage est prévue entre les deux bandes de fermeture (32, 34), par laquelle un entrebâillement entre les bandes de fermeture (32, 34) est délimité lorsque le système de fermeture éclair de serrage (30, 31) est ouvert.

2. Revêtement selon la revendication 1,
**caractérisé en ce**
**qu'**au moins une première paire de profilés de châssis (40) et une deuxième paire de profilés de châssis (41) sont prévues, la deuxième paire de profilés de châssis (41) s'étendant de manière transversale par rapport à la première paire de profilés de châssis (40), et
**que** l'élément à membrane (12) peut être serré de manière biaxiale entre les profilés de châssis (40, 41).

3. Revêtement selon la revendication 2,
**caractérisé en ce**
**qu'**au moins deux systèmes de fermeture éclair de serrage (30, 31) sont prévus afin de serrer de manière biaxiale l'élément à membrane (12), un premier système de fermeture éclair de serrage (30) s'étendant en direction de la première paire de profilés de châssis (40) et un deuxième système de fermeture de serrage (31) s'étendant en direction de la deuxième paire de profilés de châssis (41).

4. Dispositif de revêtement selon l'une quelconque des revendications 1 à 3, **caractérisé en ce**
**qu'**au moins deux systèmes de fermeture éclair de serrage (30, 31) sont présents; lesquels sont disposés essentiellement de manière parallèle l'un à l'autre.

5. Revêtement selon l'une quelconque des revendications 1 à 4,
**caractérisé en ce**
**qu'**au moins un assemblage à bourrelet est présent sous la forme d'un moyen d'assemblage venant en prise par l'arrière.

6. Revêtement selon l'une quelconque des revendications 1 à 5,
**caractérisé en ce**
**que** l'élément à membrane (12) présente au moins un système de fermeture éclair de serrage (30, 31), comprenant deux bandes de fermeture (32, 34) et une membrane (14),
**qu'**une première bande de fermeture (32) est formée au niveau d'une zone de bordure de la membrane (14), et
**qu'**une deuxième bande de fermeture (34) servant à fixer l'élément à membrane (12) au niveau d'un profilé de châssis (40, 41) présente, en tant que partie d'un moyen d'assemblage venant en prise par l'arrière, un renfort de bordure, en particulier un bourrelet.

7. Revêtement selon l'une quelconque des revendications 1 à 6,
**caractérisé en ce**
**que** la partie d'assemblage comprend une bande d'assemblage (35) textile, qui est disposée le long du système de fermeture éclair de serrage (30, 31).

8. Revêtement selon l'une quelconque des revendications 1 à 7,
**caractérisé en ce**
**que** la partie d'assemblage comprend un système de fermeture éclair d'accès (20), qui est disposé le long du système de fermeture éclair de serrage (30, 31).

9. Revêtement selon la revendication 8,
**caractérisé en ce**
**que** le système de fermeture éclair de serrage (30, 31) et le système de fermeture éclair d'accès (20) sont disposés l'un par rapport à l'autre de telle manière qu'un état précontraint peut être réglé par la fermeture du système de fermeture éclair d'accès (20) et qu'un état serré de l'élément à membrane (12) peut être réglé par la fermeture qui suit du système de fermeture éclair de serrage (30, 31).

10. Revêtement selon l'une quelconque des revendications 5 à 9,
**caractérisé en ce**
**que** l'élément à membrane (12) peut être déplacé dans un état non serré et/ou dans un état précontraint, en particulier lorsque le système de fermeture éclair de serrage (30, 31) est ouvert, librement entre les profilés de châssis (40, 41).

11. Revêtement selon l'une quelconque des revendications 1 à 10,
**caractérisé en ce**
**qu'**au moins un des profilés de châssis (40, 41) peut être déplacé aux fins du serrage supplémentaire et/ou aux fins de l'ajustement de l'élément à membrane (12).

12. Moyen de fixation et de serrage pour éléments à membrane (12) comprenant une première bande de fermeture (32) et une deuxième bande de fermeture (34), par lesquelles est formé un système de fermeture éclair de serrage (30, 31), un renfort de bordure étant formé au niveau d'une des deux bandes de fermeture (32, 34) le long d'une direction longitudinale de la bande de fermeture (32, 34), lequel peut être assemblé à une rainure à bourrelet afin de former un assemblage venant en prise par l'arrière,
**caractérisé en ce**
**qu'**au moins une partie d'assemblage est prévue entre les deux bandes de fermeture (32, 34), par laquelle un entrebâillement entre les bandes de fermeture (32, 34) est délimité lorsque le système de fermeture éclair de serrage (30, 31) est ouvert.

13. Moyen de fixation et de serrage selon la revendication 12,
**caractérisé en ce**
**que** le renfort de bordure est un bourrelet (36), qui est assemblé à la bande de fermeture (32, 34) de manière solidaire, en particulier par projection.
